# EUROPEAN PATENT SPECIFICATION

(11) **EP 3 963 220 B1**
(45) Date of publication and mention of the grant of the patent: **02.04.2025**
(21) Application number: 19723696.1
(22) Date of filing: 29.04.2019
(51) Int. Cl.: F16B 39/24, F16B 39/286, F16B 39/38, F16B 43/00

(54) **A HUB LOCK NUT ASSEMBLY**
NABENKONTERMUTTERANORDNUNG
ENSEMBLE ÉCROU DE BLOCAGE DE MOYEU

(43) Date of publication of application: 09.03.2022
(73) Proprietor: VOLVO TRUCK CORPORATION, 405 08 Göteborg (SE)
(72) Inventor: SANDRASEKARAN, Ramachandran, Bangalore - 560093 Karnataka (IN); AUGUSTSSON, Kent, 517 37 Bollebygd (SE); ANDERSSON, Tobias, 423 38 Torslanda (SE)
(74) Representative: Zacco Sweden AB
(86) International application number: PCT/EP2019/060964
(87) International publication number: WO 2020/221429

(56) References cited:
- BE-A- 637 228
- FR-A1- 2 729 190
- SE-C1- 48 583

## Description

### TECHNICAL FIELD

The present disclosure relates to hub lock nut assemblies for holding a wheel hub in position.

The invention can be applied in heavy duty vehicles, such as trucks, buses, recreational vehicles and construction equipment.

### BACKGROUND

A wheel hub assembly, also sometimes referred to as a hub assembly, wheel hub unit or wheel hub bearing, is an automotive part used in many vehicle types such as trucks and semi-trailers. A wheel is attached to the wheel hub assembly by bolts. A roller bearing between the axle hub and axle shaft ensures easy rotation of the wheels.

The wheel hub assembly comprises a hub lock nut, which is a safety component that retains the wheel end in its position. It is important that the hub lock nut is properly tightened such that the wheel does not detach from the wheel hub assembly. The hub lock nut must also provide a prevailing torque to prevent loosening of the hub lock nut which holds the wheel hub in position.

GB 2508620 A discloses a locknut assembly comprising a lock nut configured to be mated with a compression washer in a mated position.

SE 48583 C1 discloses a locknut assembly comprising a nut arranged to be mated with a tapered washer.

FR2729190A1 discloses a known lock nut.

There is a need for improved hub lock nut assemblies.

### SUMMARY

It is an object of the present disclosure to provide improved hub lock nut assemblies.

The invention is a hub lock nut as described in claim 9.

This object is obtained by a hub lock nut assembly for retaining a vehicle wheel hub in position. The hub lock nut assembly comprises a hub lock nut and a mating component with which the hub lock nut is arranged to be mated in a mated position. The hub lock nut comprises a circumferential inner wall defining a central hole. This inner wall has a threaded portion separated into a first section and a second section by an annular groove in the threaded portion, thereby configuring the second section as a resilient portion arranged to flex with respect to the first section in an axial direction. The mating component comprises an inner wall defining a central hole extending in the axial direction and matching the central hole of the hub lock nut. The mating component comprises an annular end surface facing in the axial direction, wherein a protrusion is arranged on the annular end surface adjacent to the central hole. The protrusion is configured to exert a force F on the second section of the hub lock nut threaded portion, in the axial direction, when in the mated position, thereby retaining the vehicle wheel hub in position.

This hub lock nut assembly provides a robust prevailing torque function and enables an efficient wheel hub assembly process. The prevailing torque function is provided by the hub lock nut and the safety washer, and does not require modifications to the spindle, which is an advantage. The hub lock nut can be manufactured in a cost efficient manner by simply machining the groove into existing nuts of suitable dimension.

According to aspects, a width of the second section of the hub lock nut threaded portion in the axial direction corresponds to between two and three times a pitch or lead of the threaded portion. This range of widths provides a desired resilience property of the resilient portion. The width is large enough such that the resilient portion is robust, yet flexible enough to act as resilient portion.

According to the invention, a width of the annular groove in the axial direction is between 0.8 and 1.2 times a pitch or lead of the threaded portion, and preferably 1.0 times the pitch or lead of the threaded portion. This range of widths allows the second section of the hub lock nut threaded portion to flex sufficiently, while not weakening the threaded portion too much. According to aspects, a depth of the annular groove is between 5 mm and 10 mm. This range of depths provide the required resilience property of the second portion.

According to aspects, the protrusion extends annually around the whole annular end surface of the mating component. This means that the pressure exerted by the mating component is evenly distributed around the whole hub lock nut, which is an advantage. According to aspects, the external force is configured to provide a prevailing torque of the hub lock nut assembly in dependence of the hub lock nut dimension, wherein the prevailing torque varies between 50 Nm and 230 Nm. It is an advantage that the prevailing torque can be configured in dependence of hub lock nut dimension, since different dimensions of locking nuts often require different prevailing torque values.

According to aspects, any of the hub lock nut and/or the mating component is integrally formed by hot-formed steel. Thus, advantageously, the disclosed hub lock nuts and mating components can be manufactured in a cost efficient manner.

There are also disclosed herein hub lock nuts, safety washers, spindles, wheel hubs and vehicles associated with the above-mentioned advantages.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present invention will become apparent when studying the appended claims and the following description. The skilled person realizes that different features of the present invention may be combined to create embodiments other than those described in the following, without departing from the scope of the present invention, which is defined by the appended claims.

### BRIEF DESCRIPTION OF THE DRAWINGS

With reference to the appended drawings, below follows a more detailed description of embodiments of the invention cited as examples. In the drawings:
- Figure 1: illustrates a vehicle;
- Figure 2: schematically illustrates a wheel hub assembly;
- Figure 3: shows an example hub lock nut;
- Figure 4: shows an example mating component; and
- Figures 5-6: schematically illustrate details of a hub lock nut assembly.

### DETAILED DESCRIPTION OF EXAMPLE EMBODIMENTS OF THE INVENTION

The invention will now be described more fully hereinafter with reference to the accompanying drawings, in which certain aspects of the invention are shown. This invention may, however, be embodied in many different forms and should not be construed as limited to the embodiments and aspects set forth herein; rather, these embodiments are provided by way of example so that this disclosure will be thorough and complete, and will fully convey the scope of the invention to those skilled in the art. Like numbers refer to like elements throughout the description.

It is to be understood that the present invention is not limited to the embodiments described herein and illustrated in the drawings; rather, the skilled person will recognize that many changes and modifications may be made within the scope of the appended claims.

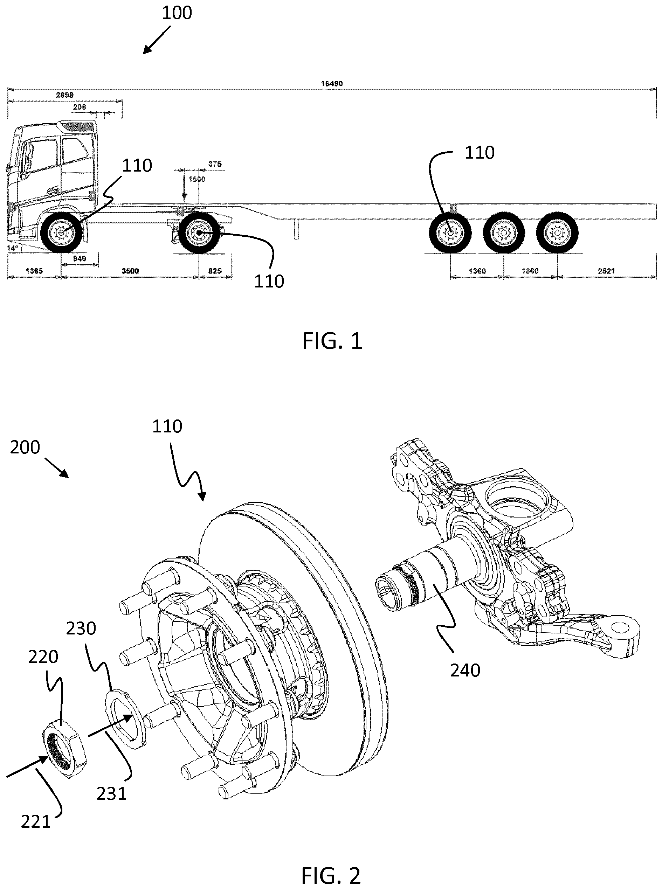

Figure 1 schematically illustrates a vehicle 100 with vehicle wheel hubs 110 holding the wheels of the vehicle in position.

Figure 2 schematically illustrates one such wheel hub assembly 110. A hub lock nut 220 is used to secure the vehicle wheel hub 110 to the spindle 240. Often, a safety washer 230 is arranged between the hub lock nut 220 and the wheel hub 110. It is desired to lock the wheel hub in position by using a hub lock nut assembly configured to provide a prevailing torque according to some given specification. Wheel hubs such as the wheel hub 110 schematically illustrated in Figure 2 are known in general and will therefore not be discussed in detail here.

The present disclosure relates to a hub lock assembly adapted to provide a required prevailing torque. Prevailing torque differentiates a locknut from a free spinning nut based on a value of how much torque is required during installation before clamp loading. For example, on a nylon-insert nut, it is the torque needed to overcome the resistance of the nylon dragging across the mating thread. This torque value is usually not very high relative to final installation torque. Tolerance ranges for torque are specified in some standards such as ISO, DIN, IFI, ASME, SAE, AN-, MS-, NAS- NASM-.

Herein, lead is the distance along a screw's or bolt's axis that is covered by one complete rotation of the screw or bolt. Pitch is the distance from the crest of one thread to the next. Because the vast majority of screw threadforms are single-start threadforms, their lead and pitch are the same. Single-start means that there is only one "ridge" wrapped around the cylinder of the screw's body. Each time that the screw's body rotates one turn, it has advanced axially by the width of one ridge. "Double-start" means that there are two "ridges" wrapped around the cylinder of the screw's body. Each time that the screw's body rotates one turn, it has advanced axially by the width of two ridges. Another way to express this is that lead and pitch are parametrically related, and the parameter that relates them, the number of starts, very often has a value of 1, in which case their relationship becomes equality. In general, lead is equal to pitch times the number of starts. Herein, without loss of generality, single-start threads are assumed throughout.

Whereas metric threads are usually defined by their pitch, that is, how much distance per thread, inch-based standards usually use the reverse logic, that is, how many threads occur per a given distance. Thus, inch-based threads are defined in terms of threads per inch (TPI). Pitch and TPI describe the same underlying physical property-merely in different terms.

The present disclosure builds on a type of hub lock nut which has a groove machined into the threaded portion. This groove divides the threaded portion into two parts. The part closest to the wheel hub is made relatively narrow so as to form a resilient portion able to flex axially when subject to a pressure force. When this resilient portion flexes, friction increases between the threads on the narrow portion and the corresponding threads on the spindle. This increased friction provides a prevailing toque function in a convenient and cost effective manner.

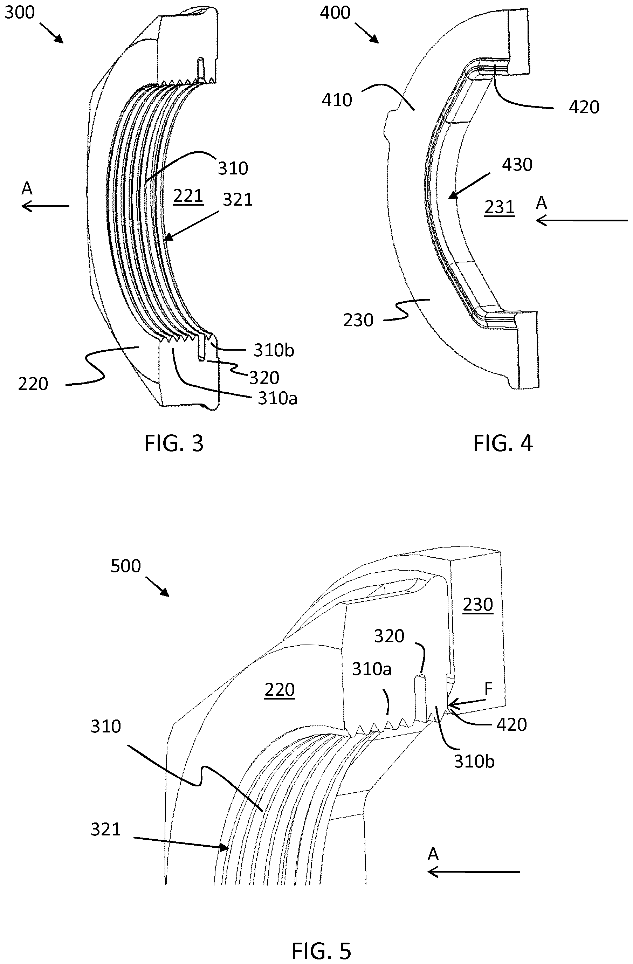

Figure 3 shows an example hub lock nut 220 according to the present disclosure. The hub lock nut 220 comprises a circumferential inner wall 321 defining a central hole 221. The inner wall 321 has a threaded portion 310 separated into a first section 310a and a second section 310b by an annular groove 320 in the threaded portion 310, thereby configuring the second section 310b as a resilient portion arranged to flex with respect to the first section 310a in an axial direction A, as discussed above. The hub lock nut 220 is arranged to be threaded onto the spindle and held in position by the prevailing torque.

Figure 4 shows an example mating component 230 according to the present disclosure. The mating component 230 is here a safety washer comprising an inner wall 430 defining a central hole 231 extending in the axial direction A and corresponding to the central hole 221 of the hub lock nut 220. The mating component 230 comprises an annular end surface 410 facing in the axial direction A. A protrusion 420 is arranged on the annular end surface 410 close to the central hole 231. This protrusion 420 is configured to exert a force F on the second section 310b of the hub lock nut 220 threaded portion 310, in the axial direction A, when in the mated position, thereby retaining the vehicle wheel hub 110 in position.

Figure 5 schematically illustrates the hub lock nut 220 and the mating component 230 in or close to the mating position, i.e., when the prevailing force is generated or is just about to be generated. The protrusion 420 on the mating component 230 is here shown to push against the side of the hub lock nut 220. This push forces the second section of the threaded portion to flex inwards axially by the force F. The inwards flexing squeezes the groove 320 as the hub lock nut 220 is threaded onto the spindle 240.

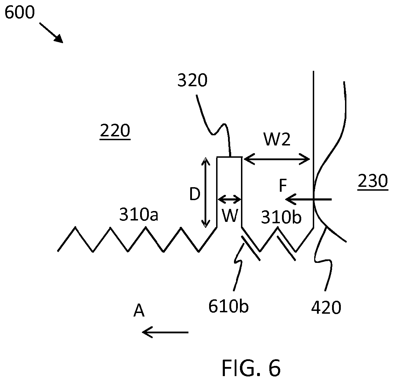

Figure 6 schematically illustrates the effects of applying pressure axially to the second section 310b of the threaded portion 310. The squeezing applies pressure between the threads of the second section 310b and the corresponding threads of the spindle 610b. This generates friction which in turn provides the required prevailing torque.

The hub lock nut and the safety washer may advantageously be manufactured using hot-formed steel.

To summarize, with reference to Figures 3-6, there is disclosed herein a hub lock nut assembly 300, 400, 500, 600 for retaining a vehicle wheel hub 110 in position. The hub lock nut assembly comprises a hub lock nut 220 and a mating component 230 with which the hub lock nut 220 is arranged to be mated in a mated position. The hub lock nut 220 comprises a circumferential inner wall 321 defining a central hole 221. Notably, the inner wall 321 has a threaded portion 310 separated into a first section 310a and a second section 310b by an annular groove 320 in the threaded portion 310, thereby configuring the second section 310b as a resilient portion arranged to flex with respect to the first section 310a in an axial direction A. In other words, the inner wall 321 has a threaded portion 310 separated into a first section 310a and a second section 310b by an annular groove 320 in the threaded portion 310, such that the second section 310b is a resilient portion arranged to flex with respect to the first section 310a in an axial direction A.

The mating component 230 comprises an inner wall 430 defining a central hole 231 extending in the axial direction A corresponding to the central hole 221 of the hub lock nut 220. The mating component 230 also comprises an annular end surface 410 facing in the axial direction A, wherein a protrusion 420 is arranged on the annular end surface 410 adjacent to the central hole 231. This protrusion 420 is configured to exert a force F on the second section 310b of the hub lock nut 220 threaded portion 310, in the axial direction A, when in the mated position, thereby retaining the vehicle wheel hub 110 in position. The location of the protrusion should preferably be optimized such that it contacts the hub lock nut close to the central hole 221.

According to aspects, a wheel hub safety washer constitutes the mating component 230.

According to aspects, any of the hub lock nut or the safety washer is formed in hot-formed steel.

Certain ranges of dimensions have been found suitable for providing required values of prevailing torque on a heavy duty vehicle. According to some aspects, the external force F is configured to provide a prevailing torque of the hub lock nut assembly in dependence of the hub lock nut dimension, wherein the prevailing torque varies between 50 Nm and 230 Nm.

The skilled person may arrive at suitable dimensions for a given requirement on prevailing torque by simulation of basic experimentation, However, with reference to Figure 6;

According to aspects, a width W2 of the second section 310b of the hub lock nut 220 threaded portion 310 in the axial direction A corresponds to between two and three times a pitch or lead of the threaded portion.

According to aspects, a width W of the annular groove 320 in the axial direction A is between 0.8 and 1.2 times a pitch or lead of the threaded portion 310, and preferably 1.0 times the pitch or lead of the threaded portion 310.

According to aspects, a depth D of the annular groove 320 is between 5 mm and 10 mm.

According to aspects, the protrusion 420 extends annually around the whole annular end surface 410 of the mating component 230.

According to aspects, the protrusion 420 has a rounded cross-section shape or a rectangular cross-section shape.

According to aspects, any of the hub lock nut 220 and the mating component 230 is integrally formed by hot-formed steel.

It is appreciated that the different parts of the hub lock nut assemblies are also disclosed herein separately. Thus, there is disclosed herein a hub lock nut 220 for retaining a vehicle wheel hub 110 in position, the hub lock nut 220 being arranged to be mated with a mating component 230 in a mated position. The hub lock nut 220 comprises a circumferential inner wall 321 defining a central hole 221. Notably, the inner wall 321 has a threaded portion 310 separated into a first section 310a and a second section 310b by an annular groove 320 in the threaded portion 310, thereby configuring the second section 310b as a resilient portion arranged to flex with respect to the first section 310a in an axial direction A.

This hub lock nut may, according to aspects, have the dimensions discussed above in connection to Figure 6.

There is also disclosed herein a safety washer 230 for retaining a vehicle wheel hub 110 in position, the safety washer 230 being arranged to be mated with a hub lock nut 220 in a mated position, the safety washer 230 comprising an inner wall 430 defining a central hole 231 extending in an axial direction A. Notably, the safety washer 230 comprises an annular end surface 410 facing in the axial direction A, wherein a protrusion 420 is arranged on the annular end surface 410 adjacent to the central hole 231, the protrusion 420 being configured to exert a force F on the second section 310b of the hub lock nut 220 threaded portion 310, in the axial direction A, when in the mated position.

## Claims

1. A hub lock nut assembly (300, 400, 500, 600) for retaining a vehicle wheel hub (110) in position, the hub lock nut assembly (300, 400, 500, 600) comprising a hub lock nut (220) and a mating component (230) with which the hub lock nut (220) is arranged to be mated in a mated position,
the hub lock nut (220) comprising a circumferential inner wall (321) defining a central hole (221), wherein the inner wall (321) has a threaded portion (310) separated into a first section (310a) and a second section (310b) by an annular groove (320) in the threaded portion (310), thereby configuring the second section (310b) as a resilient portion arranged to flex with respect to the first section (310a) in an axial direction (A),
the mating component (230) comprising an inner wall (430) defining a central hole (231) extending in the axial direction (A) and corresponding to the central hole (221) of the hub lock nut (220), the mating component (230) comprising an annular end surface (410) facing in the axial direction (A), wherein a protrusion (420) is arranged on the annular end surface (410), the protrusion (420) being configured to exert a force (F) on the second section (310b) of the hub lock nut (220) threaded portion (310), in the axial direction (A), when in the mated position, thereby retaining the vehicle wheel hub (110) in position,
**characterized by that** a width (W) of the annular groove (320) in the axial direction (A) is between 0.8 and 1.2 times a pitch or lead of the threaded portion (310), and preferably 1.0 times the pitch or lead of the threaded portion (310).

2. The hub lock nut assembly (600) according to claim 1, wherein a width (W2) of the second section (310b) of the hub lock nut (220) threaded portion (310) in the axial direction (A) corresponds to between two and three times a pitch or lead of the threaded portion.

3. The hub lock nut assembly (600) according to any previous claim, wherein a depth (D) of the annular groove (320) is between 5 mm and 10 mm.

4. The hub lock nut assembly (300, 400, 500, 600) according to any previous claim, wherein a wheel hub safety washer constitutes the mating component (230).

5. The hub lock nut assembly (400, 500) according to any previous claim, wherein the protrusion (420) extends annually around the whole annular end surface (410) of the mating component (230).

6. The hub lock nut assembly (300, 400, 500, 600) according to any previous claim, wherein the external force (F) is configured to provide a prevailing torque of the hub lock nut assembly in dependence of the hub lock nut dimension, wherein the prevailing torque varies between 50 Nm and 230 Nm.

7. The hub lock nut assembly (300, 400, 500, 600) according to any previous claim, wherein any of the hub lock nut (220) and the mating component (230) is integrally formed by hot-formed steel.

8. A vehicle (100) comprising the hub lock nut assembly (300, 400, 500, 600) according to any previous claim.

9. A hub lock nut (220) for retaining a vehicle wheel hub (110) in position, the hub lock nut (220) being arranged to be mated with a mating component (230) in a mated position, the hub lock nut (220) comprising a circumferential inner wall (321) defining a central hole (221), wherein the inner wall (321) has a threaded portion (310) separated into a first section (310a) and a second section (310b) by an annular groove (320) in the threaded portion (310), thereby configuring the second section (310b) as a resilient portion arranged to flex with respect to the first section (310a) in an axial direction (A),
**characterized by that** a width (W) of the annular groove (320) in the axial direction (A) is between 0.8 and 1.2 times a pitch or lead of the threaded portion (310), and preferably 1.0 times the pitch or lead of the threaded portion (310).

10. The hub lock nut (220) according to claim 10, wherein a width (W2) of the second section (310b) of the hub lock nut (220) threaded portion (310) in the axial direction (A) corresponds to between two and three times a pitch or lead of the threaded portion.

11. The hub lock nut (220) according to any of claims 9-10, wherein a depth (D) of the annular groove (320) is between 5 mm and 10 mm.

## Patentansprüche

1. Nabenkontermutteranordnung (300, 400, 500, 600) zum Halten einer Fahrzeugradnabe (110) in Position, wobei die Nabenkontermutteranordnung (300, 400, 500, 600) eine Nabenkontermutter (220) und ein Gegenstück (230) umfasst, wobei die Nabenkontermutter (220) dazu angeordnet ist, mit diesem in einer verbundenen Position verbunden zu sein, wobei die Nabenkontermutter (220) eine umlaufende Innenwand (321) umfasst, die ein zentrales Loch (221) definiert, wobei die Innenwand (321) einen Gewindeabschnitt (310) aufweist, der durch eine ringförmige Nut (320) in dem Gewindeabschnitt (310) in einen ersten Abschnitt (310a) und einen zweiten Abschnitt (310b) getrennt ist, wodurch der zweite Abschnitt (310b) als ein elastischer Abschnitt konfiguriert ist, der dazu angeordnet ist, sich in Bezug auf den ersten Abschnitt (310a) in einer axialen Richtung (A) zu biegen,
wobei das Gegenstück (230) eine Innenwand (430) umfasst, die ein zentrales Loch (231) definiert, das sich in der axialen Richtung (A) erstreckt und dem zentralen Loch (221) der Nabenkontermutter (220) entspricht, wobei das Gegenstück (230) eine ringförmige Endfläche (410) umfasst, die in die axiale Richtung (A) weist, wobei ein Vorsprung (420) auf der ringförmigen Endfläche (410) angeordnet ist, wobei der Vorsprung (420) dazu konfiguriert ist, in der verbundenen Position eine Kraft (F) auf den zweiten Abschnitt (310b) des Gewindeabschnitts (310) der Nabenkontermutter (220) in der axialen Richtung (A) auszuüben, wodurch die Fahrzeugradnabe (110) in Position gehalten wird,
**dadurch gekennzeichnet, dass** eine Breite (W) der ringförmigen Nut (320) in der axialen Richtung (A) zwischen dem 0,8- und 1,2-fachen einer Steigung oder Führung des Gewindeabschnitts (310) und bevorzugt das 1,0-fache der Steigung oder Führung des Gewindeabschnitts (310) beträgt.

2. Nabenkontermutteranordnung (600) nach Anspruch 1, wobei eine Breite (W2) des zweiten Abschnitts (310b) des Gewindeabschnitts (310) der Nabenkontermutter (220) in der axialen Richtung (A) zwischen dem Zwei- und Dreifachen einer Steigung oder Führung des Gewindeabschnitts entspricht.

3. Nabenkontermutteranordnung (600) nach einem der vorhergehenden Ansprüche, wobei eine Tiefe (D) der ringförmigen Nut (320) zwischen 5 mm und 10 mm beträgt.

4. Nabenkontermutteranordnung (300, 400, 500, 600) nach einem der vorhergehenden Ansprüche, wobei eine Radnabensicherungsscheibe das Gegenstück (230) darstellt.

5. Nabenkontermutteranordnung (400, 500) nach einem der vorhergehenden Ansprüche, wobei sich der Vorsprung (420) ringförmig um die gesamte ringförmige Endfläche (410) des Gegenstücks (230) erstreckt.

6. Nabenkontermutteranordnung (300, 400, 500, 600) nach einem der vorhergehenden Ansprüche, wobei die externe Kraft (F) dazu konfiguriert ist, ein vorherrschendes Drehmoment der Nabenkontermutteranordnung in Abhängigkeit von der Nabenkontermutterabmessung bereitzustellen, wobei das vorherrschende Drehmoment zwischen 50 Nm und 230 Nm variiert.

7. Nabenkontermutteranordnung (300, 400, 500, 600) nach einem der vorhergehenden Ansprüche, wobei ein beliebiges der Nabenkontermutter (220) und des Gegenstücks (230) einstückig aus warmgeformtem Stahl ausgebildet ist.

8. Fahrzeug (100), umfassend die Nabenkontermutteranordnung (300, 400, 500, 600) nach einem der vorhergehenden Ansprüche.

9. Nabenkontermutter (220) zum Halten einer Fahrzeugradnabe (110) in Position, wobei die Nabenkontermutter (220) dazu angeordnet ist, in einer verbundenen Position mit einem Gegenstück (230) verbunden zu sein,
wobei die Nabenkontermutter (220) eine umlaufende Innenwand (321) umfasst, die ein zentrales Loch (221) definiert, wobei die Innenwand (321) einen Gewindeabschnitt (310) aufweist, der durch eine ringförmige Nut (320) in dem Gewindeabschnitt (310) in einen ersten Abschnitt (310a) und einen zweiten Abschnitt (310b) getrennt ist, wodurch der zweite Abschnitt (310b) als ein elastischer Abschnitt konfiguriert ist, der dazu angeordnet ist, sich in Bezug auf den ersten Abschnitt (310a) in einer axialen Richtung (A) zu biegen,
**dadurch gekennzeichnet, dass** eine Breite (W) der ringförmigen Nut (320) in der axialen Richtung (A) zwischen dem 0,8- und 1,2-fachen einer Steigung oder Führung des Gewindeabschnitts (310) und bevorzugt das 1,0-fache der Steigung oder Führung des Gewindeabschnitts (310) beträgt.

10. Nabenkontermutter (220) nach Anspruch 10, wobei eine Breite (W2) des zweiten Abschnitts (310b) des Gewindeabschnitts (310) der Nabenkontermutter (220) in der axialen Richtung (A) zwischen dem Zwei- und Dreifachen einer Steigung oder Führung des Gewindeabschnitts entspricht.

11. Nabenkontermutter (220) nach einem der Ansprüche 9-10, wobei eine Tiefe (D) der ringförmigen Nut (320) zwischen 5 mm und 10 mm beträgt.

## Revendications

1. Ensemble écrou de blocage de moyeu (300, 400, 500, 600) pour maintenir un moyeu de roue de véhicule (110) en position, l'ensemble écrou de blocage de moyeu (300, 400, 500, 600) comprenant un écrou de blocage de moyeu (220) et un composant d'accouplement (230) avec lequel l'écrou de blocage de moyeu (220) est agencé pour être accouplé dans une position accouplée, l'écrou de blocage de moyeu (220) comprenant une paroi interne circonférentielle (321) définissant un trou central (221), la paroi interne (321) comportant une partie filetée (310) séparée en une première section (310a) et une seconde section (310b) par une rainure annulaire (320) dans la partie filetée (310), configurant ainsi la seconde section (310b) comme une partie élastique agencée pour fléchir par rapport à la première section (310a) dans une direction axiale (A),
le composant d'accouplement (230) comprenant une paroi interne (430) définissant un trou central (231) s'étendant dans la direction axiale (A) et correspondant au trou central (221) de l'écrou de blocage de moyeu (220), le composant d'accouplement (230) comprenant une surface d'extrémité annulaire (410) tournée dans la direction axiale (A), une saillie (420) étant disposée sur la surface d'extrémité annulaire (410), la saillie (420) étant configurée pour exercer une force (F) sur la seconde section (310b) de la partie filetée (310) de l'écrou de blocage de moyeu (220), dans la direction axiale (A), lorsqu'il est dans la position d'accouplement, retenant ainsi le moyeu de roue de véhicule (110) en position,
**caractérisé en ce qu'une** largeur (W) de la rainure annulaire (320) dans la direction axiale (A) est comprise entre 0,8 et 1,2 fois un pas ou une avance de la partie filetée (310), et de préférence 1,0 fois le pas ou l'avance de la partie filetée (310).

2. Ensemble écrou de blocage de moyeu (600) selon la revendication 1, dans lequel une largeur (W2) de la seconde section (310b) de la partie filetée (310) de l'écrou de blocage de moyeu (220) dans la direction axiale (A) correspond à entre deux et trois fois un pas ou une avance de la partie filetée.

3. Ensemble écrou de blocage de moyeu (600) selon l'une quelconque des revendications précédentes, dans lequel une profondeur (D) de la rainure annulaire (320) est comprise entre 5 mm et 10 mm.

4. Ensemble écrou de blocage de moyeu (300, 400, 500, 600) selon l'une quelconque des revendications précédentes, dans lequel une rondelle de sécurité de moyeu de roue constitue le composant d'accouplement (230).

5. Ensemble écrou de blocage de moyeu (400, 500) selon l'une quelconque des revendications précédentes, dans lequel la saillie (420) s'étend annuellement autour de toute la surface d'extrémité annulaire (410) du composant d'accouplement (230).

6. Ensemble écrou de blocage de moyeu (300, 400, 500, 600) selon l'une quelconque des revendications précédentes, dans lequel la force externe (F) est configurée pour fournir un couple prédominant de l'ensemble écrou de blocage de moyeu en fonction de la dimension de l'écrou de blocage de moyeu, dans lequel le couple prédominant varie entre 50 Nm et 230 Nm.

7. Ensemble écrou de blocage de moyeu (300, 400, 500, 600) selon l'une quelconque des revendications précédentes, dans lequel l'un quelconque de l'écrou de blocage de moyeu (220) et du composant d'accouplement (230) est formé d'un seul tenant par de l'acier formé à chaud.

8. Véhicule (100) comprenant l'ensemble écrou de blocage de moyeu (300, 400, 500, 600) selon l'une quelconque des revendications précédentes.

9. Écrou de blocage de moyeu (220) pour maintenir un moyeu de roue de véhicule (110) en position, l'écrou de blocage de moyeu (220) étant conçu pour être accouplé à un composant d'accouplement (230) dans une position accouplée, l'écrou de blocage de moyeu (220) comprenant une paroi interne circonférentielle (321) définissant un trou central (221), la paroi interne (321) comportant une partie filetée (310) séparée en une première section (310a) et une seconde section (310b) par une rainure annulaire (320) dans la partie filetée (310), configurant ainsi la seconde section (310b) comme une partie élastique conçue pour fléchir par rapport à la première section (310a) dans une direction axiale (A),
**caractérisé en ce qu'une** largeur (W) de la rainure annulaire (320) dans la direction axiale (A) est comprise entre 0,8 et 1,2 fois un pas ou une avance de la partie filetée (310), et de préférence 1,0 fois le pas ou l'avance de la partie filetée (310).

10. Écrou de blocage de moyeu (220) selon la revendication 10, dans lequel une largeur (W2) de la seconde section (310b) de la partie filetée (310) de l'écrou de blocage de moyeu (220) dans la direction axiale (A) correspond à entre deux et trois fois un pas ou une avance de la partie filetée.

11. Écrou de blocage de moyeu (220) selon l'une quelconque des revendications 9 à 10, dans lequel une profondeur (D) de la rainure annulaire (320) est comprise entre 5 mm et 10 mm.
